(19) Europäisches Patentamt European Patent Office Office européen des brevets

(11) **EP 4 742 139 A1**

(12) **EUROPEAN PATENT APPLICATION**

(43) Date of publication:
**13.05.2026 Bulletin 2026/20**

(21) Application number: **24212004.6**

(22) Date of filing: **11.11.2024**

(51) International Patent Classification (IPC):
*G06Q 50/02* (2024.01)  *A01B 79/00* (2006.01)
*H04W 4/02* (2018.01)  *H04W 4/38* (2018.01)

(52) Cooperative Patent Classification (CPC):
**G06Q 50/02; A01B 79/005**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.11.2024 US 202463717461 P**

(71) Applicant: **Yara International ASA**
**0277 Oslo (NO)**

(72) Inventors:
• **BARIK, Muhammad**
**Tampa, 33602 (US)**
• **ARAB, Mehrdad**
**48249 Dülmen (DE)**
• **MAHARJAN, Ganga Ram**
**48249 Dülmen (DE)**
• **HETTLAGE, Laurenz**
**48249 Dülmen (DE)**

(74) Representative: **AWA Sweden AB**
**Box 5117**
**200 71 Malmö (SE)**

(54) **METHOD AND SYSTEM FOR DETERMINING GAS EMISSIONS OF AGRICULTURAL PRODUCTS**

(57)    The present invention relates to a computer-implemented method and system for determining an agricultural product related gas emission in a geographical area, wherein the method comprises determining a geographical area, receiving soil and weather data for the determined geographical area, receiving agricultural product data, wherein receiving agricultural product data comprises receiving an agricultural product composition and an agricultural product amount, wherein determining an emission amount further comprises, generating a grid with a plurality of grid cells over the determined area, and determining for a plurality of grid cells: a soil profile, a volumetric soil water content, a water filled pore space value based on the volumetric soil water content and the soil profile, an emission factor based on the water filled pore space, an agricultural product amount, an emission amount of an agricultural product related gas based on the emission factor and the agricultural product distribution, and the method further comprising generating an emission amount of the agricultural product related gas for the determined area based on the determined emission amount for at least a portion of the grid cells.

FIG. 5

EP 4 742 139 A1

## Description

### Technical field

The present disclosure relates to a method and system for determining an amount of gas emissions after application of an agricultural product in a determined area and determining mitigations options.

### Background

Greenhouse gases have become a global concern due to their contribution to climate change and the stricter regulations introduced to reduce them. The agricultural sector represents a large contribution (nearly 12% according to a 2012 estimation) to the worldwide emissions. Nitrous oxide ($N_2O$) is one of the dominant greenhouse gases with warming potential of 310 times of CO2. About 80% of $N_2O$ emission from anthropogenic sources originate from agricultural sources, where agricultural fields are the major contributor.

Hence, $N_2O$ gas emission from management of agricultural lands is of importance and interest for all the contributors and partners along the food/product chain. Manufacturers of agricultural products for use in the farming industry are interested in quantifying emission to mitigate emission from their products. Farmers aim at reducing emission from their lands by adopting sustainable farming practices promoting resource/nutrient use efficiency for high productivity and to gain economic benefits. And actors at the receiving end of the food/product chain are interested in purchasing goods which guarantee a low footprint of greenhouse gas emissions so that their final customers are satisfied.

Until now, many approaches have been attempted in quantification of $N_2O$ gas emission from agricultural fields due to N fertilizer application, but uncertainties remain due to difficulties in the quantification process. An emission factor guideline was established by the Intergovernmental Panel on Climate Change (IPCC) in 2006, which accounts $N_2O$ emission as 1% of total N applied in the field. Such an approximated value is neither accurate enough nor does it represent the variability present on the field due to different local conditions like weather, soil and fertilizer distribution.

Hence, it is the aim of the current disclosure to determine a method which tackles the above-mentioned challenges and solves the disadvantages of the existing methodologies.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

### Summary

According to a first aspect of the present disclosure, this and other objectives are achieved by a computer-implemented method for determining an emission amount of an agricultural product related gas in a geographical area, wherein the method comprises determining a geographical area; receiving soil and weather data for the determined geographical area; receiving agricultural product data, wherein receiving agricultural product data comprises receiving an agricultural product composition and an agricultural product amount; wherein determining an emission amount further comprises: generating a grid with a plurality of grid cells over the determined geographical area, and determining for a plurality of grid cells a soil profile; a volumetric soil water content; a water filled pore space value based on the volumetric soil water content and the soil profile; an emission factor based on the water filled pore space; an agricultural product amount; an emission amount of an agricultural product related gas based on the emission factor and the agricultural product amount; and wherein the method further comprises generating an emission amount of the agricultural product related gas for the determined area based on the determined emission amount for at least a portion of the grid cells.

Following this approach, an improved and more accurate emission amount of an agricultural product can be determined.

According to a second aspect of the current disclosure, determining a soil profile for the plurality of cells comprises generating a plurality of vertical soil layers and determining a volumetric soil water status comprises determining movement of water in the plurality of layers comprised in the plurality of grid cells.

Following this approach, water movements in soil can be accounted for.

According to a third aspect of the current disclosure, determining an emission factor comprises determining a water filled pore space value for the top layer of the plurality of layers and the emission factor is determined based on the water filled pore space value of the top layer.

Following this approach, the determination of the emission factor is improved.

According to a further aspect of the current disclosure, determining a volumetric soil water content comprises at least one of determining soil water movement, an evapotranspiration amount and a root water uptake.

Following this approach, the volumetric soil water content can account for further influencing parameters.

According to a further aspect of the current disclosure, determining an evapotranspiration amount comprises determining an evapotranspiration amount (ET0) and calibrating by means of a crop coefficient (Kc).

Following this approach, crop properties can be taken into consideration.

According to a further aspect of the current disclosure, calibrating by means of a crop coefficient further comprises having a crop transpiration coefficient (Kcb) and a crop related soil evaporation coefficient (Ke).

Following this approach, both soil evaporation and crop transpiration can be accounted for.

According to a further aspect of the current disclosure, receiving agricultural product data further comprises receiving at least one of agricultural product application maps and agricultural product sales data.

Following this approach, the agricultural product content in the plurality of grid cells can be improved.

According to a further aspect of the current disclosure, determining a geographical area further comprises receiving landcover classification data and defining subareas based on the landcover classification data.

Following this approach, the determined area can be more accurately determined.

According to a further aspect of the current disclosure, determining for at least a portion of the grid cells comprises the plurality of grid cells present in the defined subareas.

Following this approach, the computational effort of the method is reduced.

According to a further aspect of the current disclosure, the method further comprises determining at least one agricultural product application amount at at least one application timing such that an emission amount is minimized.

Following this approach, mitigation measures can be generated to reduce the emission amounts.

According to a further aspect of the current disclosure, receiving agricultural product data comprises receiving a plurality of agricultural product compositions and agricultural product amounts, the method being further configured to determine the emission for the plurality of agricultural product compositions and product amounts.

Following this approach, different agricultural products can be taken into consideration.

According to a further aspect of the current disclosure, the method further comprises determining a specific product composition and corresponding product amount which results in the smaller emission amount based on the determined emission for the plurality of agricultural product compositions and product amounts.

Following this approach, an optimal recommendation of agricultural products which reduces the emission amounts can be determined.

According to further aspects of the current disclosure, a system, a data processing apparatus, a computer-readable storage medium, and a computer program product configured to carry out the above discussed methods are envisaged within the present disclosure.

**Brief description of the drawings**

The accompanying drawings, which are included to provide a further understanding of the present disclosure and are incorporated in and constitute a part of this specification, illustrate embodiments of the disclosure and together with the description serve to explain the principles of the disclosure.

Fig. 1A shows a schematic representation of a system according to an embodiment of the present disclosure.

Fig. 1B shows a representation of an agroforestry area according to one field of application of the present disclosure.

Fig. 2A shows a geographical area upon which the method of the current disclosure is applied.

Fig. 2B shows another view of a geographical area representing a grid and a mask according to an embodiment of the present disclosure.

Fig. 2C shows a predetermined geographical area with emission amounts as determined for the plurality of grid cells.

Figs. 3A, 3B and 3C show the determined emission factors for the plurality of grid cells of a predetermined geographical area at different points in time.

Figs. 4A, 4B and 4C show the determined emission amounts for the plurality of grid cells of a predetermined geographical area at different points in time.

Figure 5 shows a schematic representation of the volumetric soil water content module according to one embodiment of the present disclosure.

Figure 6 shows a schematic representation of the method of the present disclosure according to one embodiment.

Figure 7 shows the evolution of the basal crop coefficient and its evolution during the crop growing season.

**Detailed Description**

As used below in this text, the singular forms "a", "an", "the" include both the singular and the plural, unless the context clearly indicates otherwise. The terms "comprise", "comprises" as used below are synonymous with "including", "include" or "contain", "contains" and are inclusive or open and do not exclude additional unmentioned parts, elements or method steps. Where this description refers to a product or process which "comprises" specific features, parts or steps, this refers to the possibility that other features, parts or steps may also be present, but may also refer to embodiments which only contain the listed features, parts or steps.

Unless defined otherwise, all terms present in the current disclosure, including technical and scientific terms, have the meaning which a person skilled in the art usually gives them. For further guidance, definitions are included to further explain terms which are used in the description of the disclosure.

The method of the current disclosure comprises determining an emission amount of an agricultural product related gas in a determined geographical area according to the different embodiments explained below.

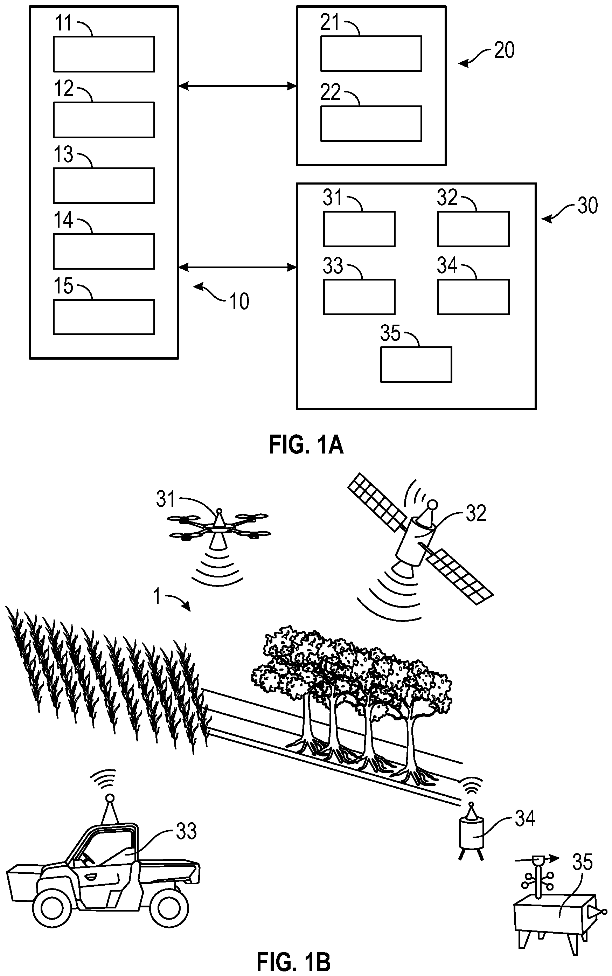

Fig. 1A shows a schematic representation of a system according to an embodiment of the present disclosure. System 10 represents a general-purpose computer or any other kind of electronic processing device. System 10 may be a laptop computer, but it is not limited thereto and may be represented by a mobile device, a server - client architecture, or the like. System 10 comprises as usual a processing unit 11, a memory unit 12, an input unit 13 (e.g. a mouse, a keyboard a touch sensitive surface or similar), an output unit 14 (e.g. a display, a printer or the like) and accessory subsystems 15 (e.g. further processing units, gps unit, ...). System 10 may comprise further subsystems or units comprised within the usual elements of an electronic device and will not be further described herein. Correspondingly, each unit of system 10 is operatively connected with the remaining units as it is customary in the current practice and won't be further discussed here. System 10 is operatively connected to a plurality of data inputs represented by data input unit 20. Data input unit 20 comprises at least one (21, 22, ...) database relating to soil data, terrain data, weather data or other agronomical data as will be explained below. However, the present disclosure is not intended to be limited to any specific databases and the use of local databases or storage units comprising soil, weather and/or agronomic data is as well comprised within the teachings of the present disclosure. Data input unit 20 may therefore be configured to retrieve and input data to system 10. The retrieved data includes at least one of soil data, weather data or further agronomic data, comprising, e.g., agricultural practices or products applied, past or current crop type and other crop data (sowing date, harvesting date, seed density, past yield, currently expected yield) present in the agricultural field(s) of a specific geographical area.

Fig. 1B shows a representation of an agroforestry area 1. Agroforestry areas usually comprise at least one of a crop, a land parcel and/or forests for agricultural or commercial uses. In such an area, different agricultural systems 30 may be present which, according to different embodiments of the present disclosure, are configured to be connected to system 10 by means of usual wired or wireless networks. For example, different devices like drones or other unmanned vehicles 31, tractors or other agricultural systems or agricultural vehicles 33 may be present on site. These devices may be used for inspection, for carrying out agricultural practices which improve the state of the soil or its productivity, like applying agricultural products, and/or for carrying out measurements on the fields comprised in the agroforestry area. Within the present disclosure, other sensing platforms are considered which can be used, comprising amongst them remote or satellite sensing platforms 32, agricultural sensors 34 and/or weather stations 35.

According to the present disclosure, an agricultural product may be understood as any crop nutrition and/or protection agent which may be used for increasing the productivity of a crop and/or agricultural field. For example, nitrogen products have a direct relation with the emitted amount of nitrous oxide ($N_2O$) due to soil processes of nitrification and denitrification occurring due to environmental conditions (such as dynamics of soil moisture) in the soil. However, other products like nitrification inhibitors or biostimulants, have a direct influence on the amount of $N_2O$ emitted. Nitrification inhibitors slow down the release of nitrogen compounds into the soil, thereby reducing the nitrification chain. Biostimulants can increase the nutrient use efficiency, more specifically nitrogen use efficiency, thereby reducing the amount of free nitrogen which can enter the nitrification chain. Crop protection agents, whilst not directly linked to the nutrient status of the plant, can help improving or protecting the plant health, thereby having an indirect influence on the nutrient status of the plant.

According to the present disclosure, a gas related to an agricultural product may be any gas emitted as a result of the application of an agricultural product or as a result of the decomposition or transformation of said agricultural product (e.g. ammonia, methane, carbon dioxide, ...). According to a further embodiment, a gas related to an agricultural product is a greenhouse gas, more specifically $N_2O$. However, greenhouse emissions are usually transcribed as equivalent tons or other measuring units of $CO_2$, the most usual gas to express greenhouse and climate change effects. Therefore, the current method may may preferably provide the emission amount in equivalent units of $CO_2$.

According to the present disclosure a determined geographical area may be defined, ranging in size from an agricultural parcel of land, or a plurality thereof, up to a specific administrative region, like a county, a province, a region, a country, or even an agglomeration of countries, such as the EU. As such, a farmer may be interested in determining the emissions of a specific field, or plurality of fields, under their management. However, local, regional or national governments, governing bodies, non-governmental agencies and/or private businesses or companies might be interested in determining the total amount over a specific region of a predetermined size, hereby being able to account for the total emissions of, e.g., a product line or a business unit in a specific administrative entity.

Hence, the method of the current disclosure comprises determining a geographical area which can be understood to comprise any of the above areas. A farmer may select a specific agricultural field or input a boundary shapefile defining their fields. However, said region may be automatically determined upon identification of a province or state (e.g. Sachsen-Anhalt, Minnesota, or the like) or specific country (e.g. Spain, Canada, India, ...).

The method of the current disclosure further comprises receiving soil and weather data for the determined geographical area. Following the current disclosure, any public or private soil databases may be used as input data for the determination of soil properties. As explained above, said repositories may be represented by data input unit 20, but local copies or remote and/or local sensors (32, 34, 35) may as well provide the needed soil and weather data, with past data stored locally or externally. Within the current disclosure, receiving soil data might comprise receiving soil texture information such as percentage of sand, silt and clay present in the soil, or further soil parameters as described below. However, these can be derived from the soil texture information as it will be explained and the current disclosure is not limited to specific soil data for the water level and hydraulic computations. For example, the method of the current disclosure may be configured to receive soil data from SSURGO, Soilgrids, ISRIC soil data hub or any equivalent repository. Said repositories may comprise data at different resolutions and depths. While not all repositories or databases may directly include all properties required for the method of the current disclosure, processing can be carried out to adapt the specificities of each database to the teaching of the current disclosure, e.g. through gridding and/or interpolation, modeling, empirical, or equivalent methods.

According to a further embodiment, the method of the current disclosure may comprise receiving terrain data. Terrain data might comprise elevation data and landcover data. Elevation data is usually available from various sources like government agencies (e.g. ESA, NASA, ...) and other geospatial data providers (e.g. Google Earth Engine, Open-Topography, ...). As above, similar processing of elevation data as explained above for soil and weather data, may be carried out to adapt the elevation data to the current disclosure.

Following available data of soil texture from the usual repositories or local analysis, soil hydraulic parameters including soil bulk density and soil water retention parameters (e.g. residual soil moisture, soil moisture at saturation, saturated soil hydraulic conductivity, soil water retention curve-shape parameter of alpha and n), sometimes referred as Van Genuchten parameters of the soil, can be derived according to well established methods (e.g. by using Rosetta packages written in python with help of primary information about soil texture such as sand, silt, and clay) and won't be further discussed herein.

The method of the current disclosure is further configured to receive past, present and/or future weather data. Weather data can be retrieved from different available databases and/or online services like the Copernicus Climate Change Service (C3S) provided by ECMWF (European Centre for Medium-Range Weather Forecasts), Meteostat, Climate Data Online or the like. Corresponding available services provide future weather data or forecasts up to a level of certainty. As mentioned above for soil repositories, weather data may be pre-processed or extended to improve the suitability with respect to the method of the current disclosure by means of gridding, interpolation or modeling. Weather data may comprise at least one of precipitation data, temperature data (e.g. maximum, average, mean and/or minimum air temperature), surface shortwave downwelling radiation, relative humidity and wind speed.

The method of the current disclosure may be configured to determine the emission amount for a specific or an open period of time, wherein said period of time may be in the past, span the present, or be a forecast of future emissions according to the intended total amount of agricultural products to be used in the coming season. This allows the users of the current method to assess past, present and future amounts of emissions to establish reports and/or comparisons as well as introducing mitigation measures.

The method of the current disclosure further comprises receiving agricultural product data, wherein receiving agricultural product data comprises receiving an agricultural product composition and an agricultural product amount. For example, receiving agricultural product composition may comprise receiving the chemical composition of the agricultural product. In case of NPK fertilizers, the percentage of N, P and/or K may be used. However, other agricultural products and/or fertilizers (mineral or organic) can be used. As already mentioned, biostimulants which increase the intake of nutrients by the plant can have an influence as well in the amount of available nutrients in the soil, specifically nitrogen. Likewise, nitrification inhibitors have an effect on the amount of available nitrogen in the soil such that it is susceptible to leaching or nitrification processes, hereby producing $N_2O$. The method of the current disclosure may be as well configured to receive product data from a list of commercially available agricultural products and be further configured to retrieve product data from an agricultural product database. Further, the method of the current disclosure is configured to receive a total amount of agricultural product for the area (e.g. 8 tons per field, or 50 kgs per square km or the like) in order to determine the emission amount.

According to a further embodiment, the method of the current disclosure further comprises determining an effective total amount of agricultural product for the determined geographical area. For example, for the determination of $N_2O$ emissions, it is important to determine the nitrogen amount present in the agricultural product, if any, or their influence with respect to the available nitrogen amount present in the soil per unit of time (due to nitrification inhibitors or additives).

The method further comprises generating a grid with a plurality of grid cells over the determined geographical area. A grid may be generated at different resolutions, e.g. at 10x10 km, 5x5km, or at a desired resolution. Following the defined resolution, a plurality of grid cells are generated, wherein the overlap of the grid with the determined geographical area must be determined to extract corresponding soil and weather data pertaining to the respective grid cell.

Depending on the size of the determined geographical area, different methods are envisaged to improve the resolution and precision, while reducing computational load. According to a further embodiment, the determined geographical area may be an agricultural field or a plurality thereof. In this case, the grid resolution may be determined based on the size of the agricultural field, wherein the grid may extend over the totality of the agricultural field.

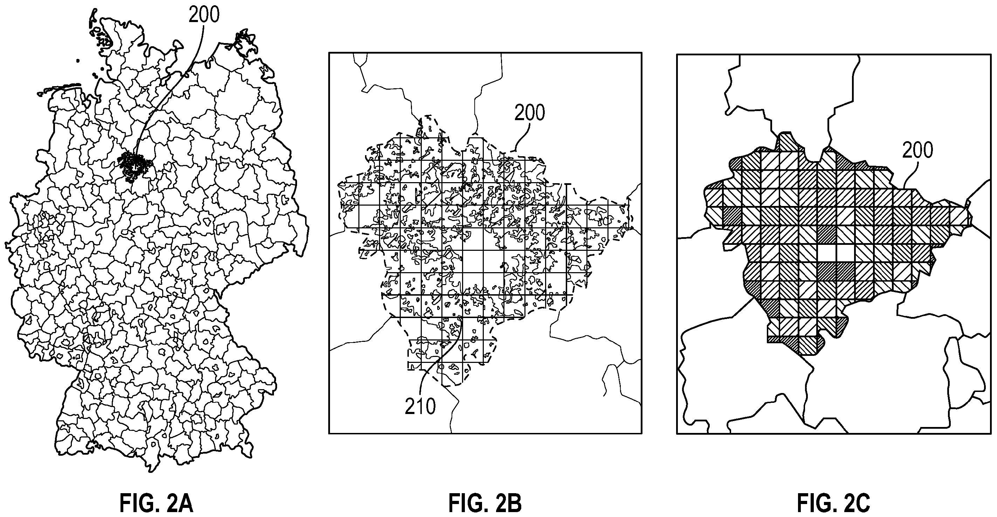

According to an embodiment of the current disclosure, when the determined geographical area is of a certain extent, like for example a county, a province, or even a country, the method of the current disclosure further comprises receiving landcover classification data in order to determine subareas within the determined geographical area which are used for agricultural purposes. For example, the pan-European land cover inventory CORINE, provided by the Copernicus Land monitoring Service, delivers up to 44 thematic classes, wherein those classes relating to agricultural areas (e.g. non-irrigated arable lands, vineyards, pastures, ...) can be selected to generate a mask function which can be superimposed on the determined geographical area, or a part thereof, to reduce the area for which a grid has to be generated and for which subsequent computations are carried out. Hereby the computational load is reduced, while the accuracy is increased by distributing the agricultural product amount over representative grids and their respective soil types, crucial for the generation of an accurate emission amount. Hence, after receiving landcover classification data, the method of the current disclosure comprises defining subareas 210, wherein these subareas are intended for agricultural use. This can be seen represented in Figures 2A, 2B and 2C, wherein within a land map of Germany a predetermined geographical area 200, e.g. the region of Hannover, is selected. Figure 2B shows a closer view of the determined geographical area 200, wherein a grid with a plurality of grid cells has been generated over the determined area.

Following with reference to Figure 2B, subareas 210 are defined upon superimposing the generated mask function with the determined geographical area. Following this embodiment, the plurality of grid cells determined for which the emission amount will be generated are those which comprise the defined subareas 210. An example of this can be seen in Figure 2C, wherein the central region of the determined geographical area presents no emissions since no subareas 210 are defined within.

As such, according to a further embodiment, determining a geographical area further comprises receiving landcover classification data and defining subareas based on the landcover classification data. According to a further embodiment, determining for a plurality of grid cells comprises the plurality of grid cells present in the defined subareas.

In the present disclosure, "masking" or a "mask function" refers to the application of data processing tools for the selection of specific regions within a map, i.e. a spatial filter, by crossing data from an already existing map with the mask function, hereby defining a subselection or subareas of the existing map.

Following the generation of a grid with a plurality of cells over the determined geographical area, the method further comprises determining a soil profile for a plurality of said grid cells. Adjusted to the existing resolution of the grid, a corresponding soil profile can be generated by processing the received soil data and the available soil data points of the database used.

According to the main embodiment, the method of the current disclosure further comprises determining a volumetric soil water content by means of a volumetric soil water content determination module for the plurality of grid cells generated within the determined geographical area.

According to a further embodiment, the volumetric soil water content determination module computes the movement of water in porous soil media. Water flow through unsaturated soil is modeled according to Richards' equation shown below as difference of soil water potential (the soil water pressure that exist for corresponding soil water content) in the vertical dimension (z) for given time steps (e.g. hourly, daily). The soil water movement is characterized by hydraulic conductivity and soil water holding capacity of the soil. The Richards' equation uses soil hydraulic properties to account for soil water movement within the soil that determines the dynamic of soil water content due to integral behavior of crop (root water uptake), soil, and environment systems. The equation reads as follows:

$$\frac{\partial \theta}{\partial t} = \frac{\partial}{\partial z}\left[k(\theta)\left(\frac{\partial h}{\partial z} + 1\right)\right],$$

where $\theta$ is the volumetric soil water content [$cm^3$ $cm^{-3}$], $t$ the time step (e.g. in days), $K$ the soil hydraulic conductivity [$cm$ $d^{-1}$], $h$ the soil pressure head [cm] and $z$ the vertical axis dimension [cm]. Following this embodiment, by means of the above represented equation, a water distribution over the specific vertical axis of the grid cells can be simulated. However, the method of the current disclosure is not limited to the specific formulation of the equation and may be adapted based on available data or modified by means of statistic measurements and/or machine learning.

According to a further embodiment, each grid cell comprises a plurality of vertical layers for which the volumetric soil water content is determined. Following this embodiment, the volumetric soil water content determination module determines a water distribution over the specific vertical axis of the grid cell, throughout the plurality of soil vertical layers. For example, 10 layers (of equal depth or not) may be defined up to a depth of 1m, across which the soil water content determination module is configured to determine the water distribution. Following this embodiment, the water filled pore space value for the respective grid cell is determined based on the volumetric soil water content of the top layer.

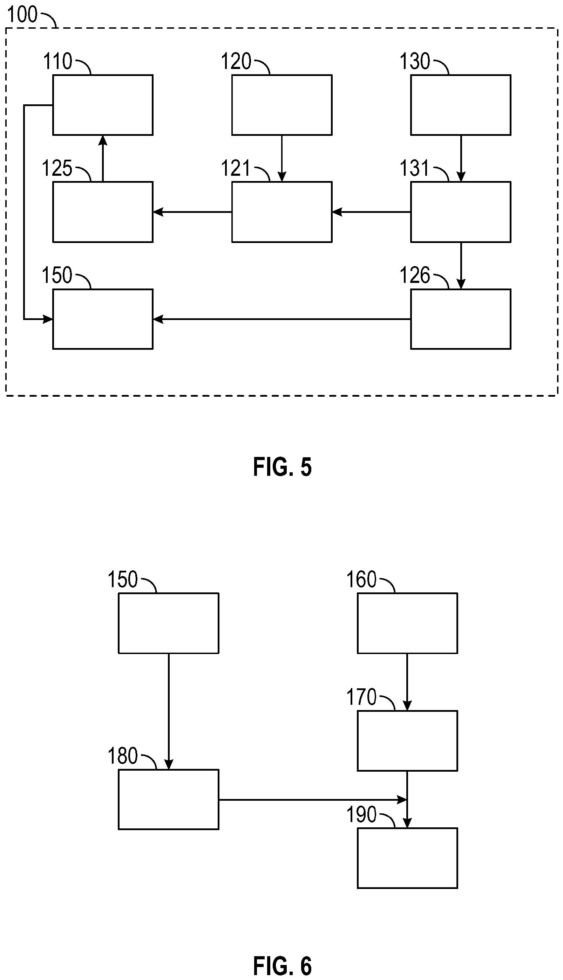

An embodiment of a volumetric soil water content determination module 100 according to the current disclosure is now described with respect to Figure 5. Figure 5 shows the module according to an embodiment, where the soil water content determination module 100 comprises a soil water module 110 and a reference evapotranspiration module 120. The reference evapotranspiration module optionally comprises a crop transpiration submodule 125 and a soil evaporation submodule 126. The volumetric soil water content determination module may further comprise a crop development module 130. Reference evapotranspiration module may be configured to determine an estimated evapotranspiration as will be explained below, wherein the estimated evapotranspiration 121, together with the crop specific coefficients 131 determined by the crop development module 130, are used to determine a crop transpiration amount in crop transpiration submodule 125. Further, crop development module outputs may be as well input to determine a soil evaporation amount by soil evaporation submodule 126. Following this embodiment, a soil water status module 150 configured to deliver the volumetric soil water content may use the outputs of the above-mentioned modules comprised in the soil water content determination module 100.

Hence, the method of the current disclosure, according to an embodiment, when determining the volumetric soil water content may further comprise determining at least one of a reference evapotranspiration, a crop transpiration amount and a soil evaporation amount as it will be explained below.

Following this embodiment, the system of the current disclosure comprises a reference evapotranspiration module 120 configured to determine the amount of water evaporated from the crop's surfaces (e.g. canopy, soil surface, and/or leaves). The reference evapotranspiration module 120 is configured to receive weather data and determine a reference evapotranspiration ($ET_0$) based on at least one of net radiation at the crop surface, minimum and maximum daily temperature, mean air daily temperature, wind speed at a specific height (e.g. 2 m), vapor pressure saturation and actual vapor pressure and slope of vapor pressure curve. According to a further embodiment, the reference evapotranspiration module further receives elevation data and corrects the reference evapotranspiration based on the elevation data.

According to a further embodiment, the determination of a reference evapotranspiration is done following the FAO56 Penman-Monteith equation (as for example to be found in FAO Irrigation and drainage paper 56, Allen, Pereira et al., Rome 1998). Hence, an exemplary representation of the equation reads as follows:

$$ET_0 = \frac{c_1 * \Delta * (R_n - G) + \frac{\gamma * c_2}{T + c_3}\left(u_2(e_s - e_a)\right)}{\Delta + \gamma + (c_4 + c_5 * u_2)},$$

where $ET_0$ represents the reference evapotranspiration [mm day$^{-1}$], $R_n$ the net radiation at the crop surface [MJ m$^{-2}$ day$^{-1}$], $G$ the soil heat flux density [MJ m$^{-2}$ day$^{-1}$], $T$ the mean air temperature at 2m height [°C], $u_2$ the wind speed at 2m height [m s$^{-1}$], $e_s$ the saturation vapor pressure [kPa], $e_a$ the actual vapor pressure [kPa], $\Delta$ the slope vapor pressure curve [kPa °C$^{-1}$], $\gamma$ the psychrometric constant [kPa °C$^{-1}$] and $c_1$, $c_2$, $c_3$, $c_4$ and $c_5$ are different constants. However, the method of the current disclosure is not limited to the specific formulation of the equation and may be adapted based on available data or modified by means of statistic measurements and/or machine learning.

According to a further embodiment, the system of the current disclosure may comprise a crop development module 130. The crop development module may be configured to determine an actual evapotranspiration amount of the crop, taking the reference evapotranspiration determined by the evapotranspiration module and adjusting it based on crop development and/or crop type. Crop development module may comprise agronomic data or farm data as mentioned above (e.g. sowing date, harvesting date, seed type, seed density, harvest date, yield, ...) to determine a crop development status throughout the growing season by means of modeling or an equivalent method. However, different methods are envisaged within the present disclosure to determine a crop development status. For example, satellite sensing platforms 32, drones 31 or local agricultural systems 30 may be configured to determine the above-mentioned data and the system of the current disclosure is configured to access them via data input unit 20 or directly by means of wired or wireless networks from local agricultural systems 30.

According to a further embodiment, crop development module 130 may be configured to determine crop specific coefficients 131 to improve the accuracy of the determined evapotranspiration from the reference $ET_0$, as determined above. Amongst the determined crop specific coefficients, crop development module 130 may determine a basal crop coefficient ($K_{cb}$) and a soil evaporation coefficient ($K_e$), wherein the basal crop coefficient may be used by the crop transpiration submodule 125 to determine a crop transpiration amount and the soil evaporation coefficient for determining a soil evaporation amount by the soil evaporation submodule 126.

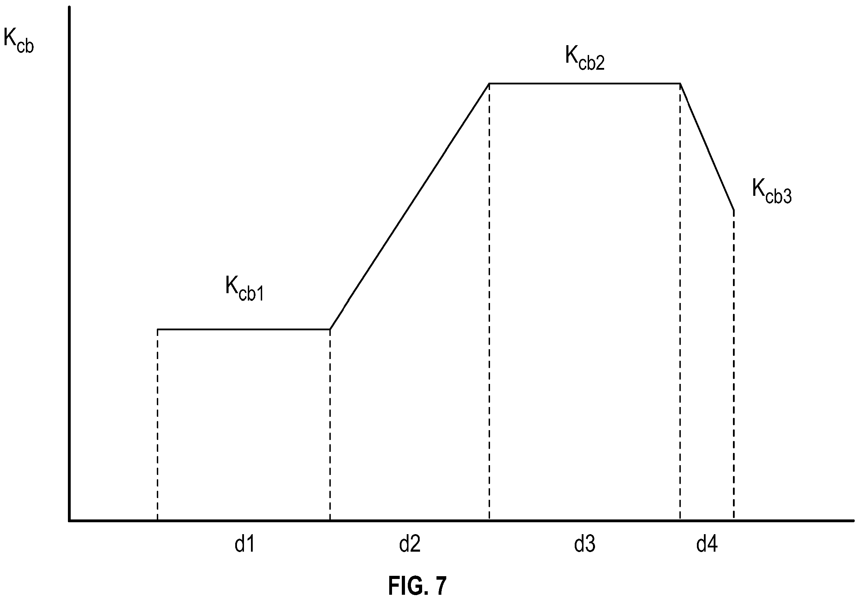

According to a further embodiment, the crop development module 130 may determine the basal crop coefficient $K_{cb}$ according to four development stages: initial stage (d1), vegetative stage (d2), reproductive stage (d3), and maturation stage (d4). Stages d1 - d4 are determined by specific crop development thresholds (e.g. respectively 0%-10 %, 10%-40 %, 40%-75 % and 75%-100%) of the growing period of the crop, starting from the beginning of the growing season, see Figure 7 for an exemplary representation. Then, representative daily $K_{cb}$ at these stages are derived from early-stage crop coefficient ($K_{cb1}$), middle stage crop coefficient ($K_{cb2}$), and maturity stage crop coefficients ($K_{cb3}$) values. For the days in d1 and d3 during initial and reproductive stages the $K_{cb}$ values are constant which are equal to $K_{cb1}$ during d1, i.e., the initial stage and $K_{cb2}$ during d3, i.e. the reproductive stage. During vegetative stage (d2), the daily $K_{cb}$ values may be linearly interpolated between $K_{cb1}$ and $K_{cb2}$. Similarly, daily $K_{cb}$ values may be interpolated between $K_{cb2}$ and $K_{cb3}$ for the period of maturity stage (d4).

According to a further embodiment, the computed basal crop coefficient $K_{cb}$ may be further applied to $ET_0$ to estimate daily transpiration which is distributed to the soil layers based on a rooting factor which depends on crop rooting depth. The crop rooting depth in the soil profile is determined by the crop growth stage which is linearly interpolated between the predefined growth stages at different intervals of growing period. The crop growth stage for a respective day is used to assign a daily rooting depth from the lookup table that corresponds to that growth stage. The root distribution function using rooting depth determines a rooting factor to re-distribute daily transpiration within the soil profile to account for root water uptake by the crop.

Following the determination of a volumetric soil water content by the volumetric soil water content module 100, soil water content module 150 may be further configured to determine a Water Filled Pore Space (WFPS) based on the volumetric soil water content and on the soil profile, wherein the WFPS is a fraction of soil pore space that is filled with water. According to the current disclosure, WFPS is derived as a ratio of volumetric soil water content as obtained by the volumetric soil water content module and the total pore space:

$$WFPS = \frac{Volumetric\ Soil\ Water\ Content}{Total\ Pore\ Space},$$

wherein the total pore space is defined as

$$Total\ Pore\ Space = 1 - \frac{soil\ bulk\ density}{particle\ density}$$

Following this embodiment, the system of the current disclosure is configured to determine the soil bulk density and particle density from the received soil data.

According to a further embodiment, soil evaporation $K_e$ may be determined as function of at least one of $K_{cb}$, crop height at different growth stages and total evaporable water defined by soil properties. Analogously, the determined soil evaporation coefficient ($K_e$) is applied to $ET_0$ to determine soil evaporation from the topsoil layer.

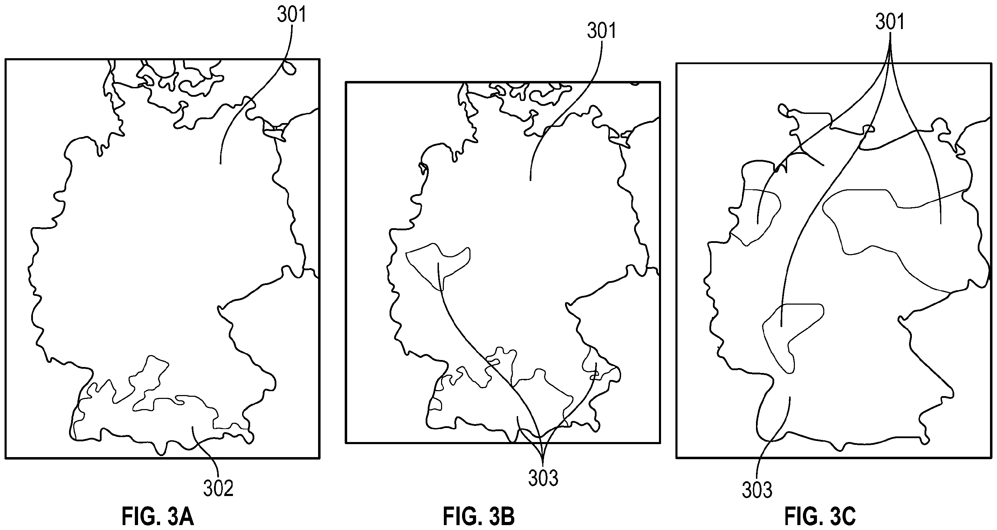

Following the main embodiment, an emission factor is determined 180 based on the water filled pore space for the plurality of grid cells. For example, according to one embodiment, an emission factor of 1.6 may be determined for grid cells where the water filled pore space is greater than 60% and an emission factor of 0.5 may be determined for grid cells where the water filled pore space is smaller than 60%. However, following other embodiments, linear, quasilinear or other equivalent relationships can be established between the water filled pore space and the emission factor. The resulting emission factor, computed for different geographical areas, can be seen in Figures 3A, 3B and 3C, which show grouped areas with different values of the emission factor for different times across a season. Area 301 may comprise areas with an emission factor of 0.5, wherein areas 302 may comprise areas with an emission factor of 0.8 and areas 303 an emission factor of 1.6. The discussed figures are only illustrative and determined to a coarse grid resolution for illustrative purposes and cannot be considered to represent any limitation of the current disclosure.

Following the main embodiment, an agricultural product amount 160 for the plurality of grid cells is determined. According to an embodiment, the determined geographical area may be defined by an agricultural field wherein the farmer is aware of the as-applied agricultural product amount by means of application maps generated by the agricultural vehicles 33. For this embodiment, the method of the current disclosure may determine the agricultural product amount from said application maps for the plurality of cells comprised in the agricultural field. According to a further embodiment, the agricultural product amount for the plurality of grid cells 160 may be generated according to a distribution of the agricultural product total amount as received for the whole determined geographical area. For example, agricultural product manufacturers may only have sales data from distributors or end-sales data to farmers without specific as-applied information. In this case, the agricultural product amount may be determined by receiving agricultural product sales location data and distributing this data across a specific zone (e.g. postal codes, administrative subregions or the like) hereby determining an agricultural product amount for the plurality of grid cells within the specific zone or a plurality of zones.

According to a further embodiment, as can be seen with reference to Figure 6, the method of the current disclosure further comprises determining an agricultural product application timing when the agricultural product has been applied. This can be determined based on a time stamp of the application time, by a user input from the farmer or by generating a spatio-temporal distribution of the agricultural product amount over a specific amount of time.

According to a further embodiment, an effective agricultural product amount for the plurality of grid cells is determined. The method of the current disclosure may further comprise determining, based on agricultural product data and the soil profile and/or on the volumetric soil water content of the respective cell, an effective agricultural product amount for the plurality of cells. Based on chemical/physical (leaching, nitrification) processes specific to the grid cell, the available agricultural product amount available for the determination of an emission amount can be adjusted. According to this embodiment, a model having both consideration of soil chemical and physical properties together with the presence of the specific agricultural products (e.g., nitrification inhibitors or other additives) is configured to adjust the effective available amount and/or distribution of the agricultural product and/or its active principles.

Based on the emission factor, the agricultural product amount and/or the effective agricultural product amount for the plurality of grid cells, a respective emission amount of the agricultural product may be determined. Finally, the emission amount for the plurality of grid cells may be combined to generate an emission amount of the determined geographical area.

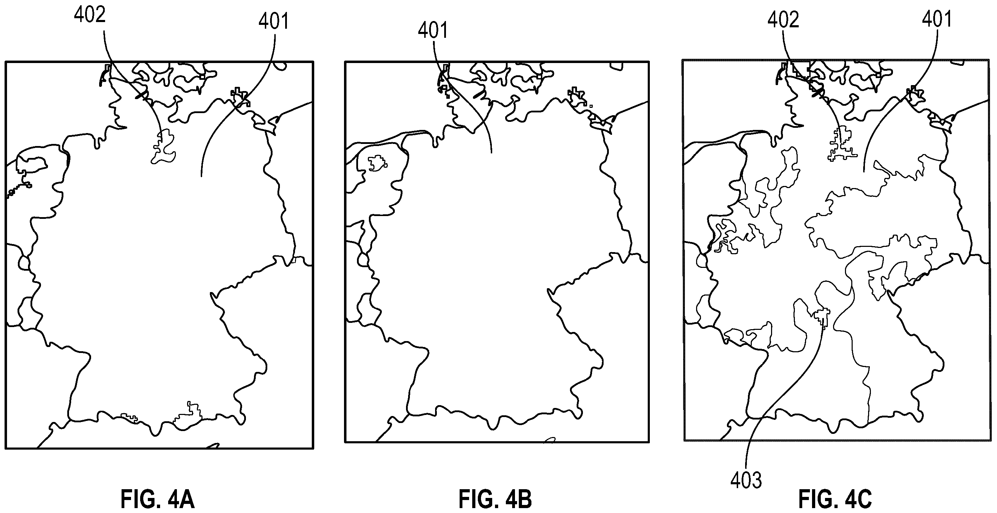

This can be seen with reference to Figures 4A, 4B and 4C, which show different local emission amounts for specific locations and time throughout a growing season. For example, reference signs 401, 402 and 403 show different locations with, respectively, growing emission amounts.

According to a further embodiment, determining an emission amount further comprises determining a daily value for at least one of the volumetric soil water content, the water filled pore space and the emission factor. Following this embodiment, a daily emission amount may be determined for the plurality of cells, and with it, an emission amount generated for the determined geographical area.

According to a further embodiment, a daily emission amount may be determined for at least a part of the present, past or future growing season, hereby determining an emission amount for a determined geographical area over a specific period of time (e.g. a month, a year, a growing season).

Once an emission amount has been determined as a function of an agricultural product amount, the soil profile and, e.g., daily values of weather future data or forecasts to generate the daily volumetric soil water content and with it the daily emission factor and daily emission amount, a multivariate cost function $\Psi$ can be generated. The multivariate cost function $\Psi$ can be expressed to be dependent on at least one application amount of an agricultural product ($M_1$, $M_2$, ...) or different agricultural products ($M_{11}$, $M_{21}$, ...) at a specific application timing ($t_1$, $t_2$, $t_{11}$, $t_{12}$, ...), wherein the amount of an agricultural product may have lower and upper limits ($M_{1max}$, $M_{1min}$, ...) and time ranges for when the application should be timed (e.g. $t_1 \in [t_A, t_B]$). Hence, the subsequent problem is a multivariate optimization function with at least one solution, wherein at least one application of an agricultural product can be set at at least one specific timing such that:

$$M_i \in (M_{imin}, M_{imax}) \quad t_j \in (t_{jA}, t_{jB}) : \Psi(M_i, t_j) = min;$$

Hence, according to a further embodiment, the method of the current disclosure further comprises determining at least one agricultural product application amount at at least one application timing such that an emission amount is minimized, wherein the emission amount is determined for the plurality of cells where the agricultural product is to be applied as mentioned above.

Following this embodiment, according to the method of the current disclosure for each grid cell, i.e. in a variable manner, application maps can be determined, which determine the specific rate for the application of an agricultural product for an agricultural field, or for a determined geographical area, which minimizes emissions.

According to a further embodiment, receiving agricultural product data comprises receiving a plurality of agricultural product compositions and agricultural product amounts, the method being further configured to determine the emission for the plurality of agricultural product compositions and product amounts. Based on the determined emission for the plurality of agricultural product compositions and product amounts, according to a further embodiment, a specific product composition and corresponding product amount is determined which results in the smaller emission amount. Once $\Psi$ has been defined for a plurality of agricultural products and application timings, same optimization procedures can be set to improve the determination of the agricultural product (composition, amount and timing) which presents smaller emissions.

According to a further embodiment, the method of the current disclosure further comprises generating instructions for an agricultural vehicle to carry out the application of the agricultural product.

According to a further embodiment, the method of the current disclosure may further comprise transmitting directly to an agricultural vehicle. According to a further embodiment, the method of the current disclosure may, alternatively, produce a machine-readable script based on the determined agricultural product application amount and/or application timing.

Hence, the current disclosure comprises as well a system 10 configured to determine an emission amount according to the above-described method, wherein the system 10 is configured to communicate, by means of wired or wireless networks or other data transfer devices or units, with an agricultural vehicle 33 which can be configured to carry out the application of an agricultural product.

All references cited in the present specification are hereby incorporated by reference in their entirety. In particular, the teachings of all references herein specifically referred to are incorporated by reference.

While the present disclosure has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The disclosure in its broader aspects is therefore not limited to the specific details, representative apparatus and method, and illustrative example shown and described.

In the present description of the application, reference is made to the accompanying drawings that form a part hereof, and in which are shown by way of illustration only of specific embodiments in which the application may be practiced. Parenthesized or emboldened reference numerals affixed to respective elements merely exemplify the elements by way of example, with which it is not intended to limit the respective elements. It is to be understood that other embodiments may be utilized and structural or logical changes may be made without departing from the scope of the present application. The following detailed description, therefore, is not to be taken in a limiting sense, and the scope of the present application is defined by the appended claims. The terms "comprises," "comprising,", "including," and "having," are inclusive and therefore specify the presence of stated features, integers, steps, operations, elements, or components, but do not preclude the presence or addition of one or more other features, integers, steps, operations, elements, components, or groups thereof. The method steps, processes, and operations described herein are not to be construed as necessarily requiring their performance in the particular order discussed or illustrated, unless specifically identified as an order of performance. It is also to be understood that additional or alternative steps may be employed.

The use of the expression "at least" or "at least one" suggests the use of one or more elements, as the use may be in one of the embodiments to achieve one or more of the desired objects or results.

The process steps, method steps, algorithms or the like may be described in a sequential order, such processes, methods and algorithms may be configured to work in alternate orders. In other words, any sequence or order of steps that may be described does not necessarily indicate a requirement that the steps be performed in that order. The steps of processes described herein may be performed in any order practical. Further, some steps may be performed simultaneously, in parallel, or concurrently. Various methods described herein may be practiced by combining one or more machine-readable storage media containing the code according to the present disclosure with appropriate standard computer hardware to execute the code contained therein. An apparatus for practicing various embodiments of the present disclosure may involve one or more computers (or one or more processors within a single computer) and storage systems containing or having network access to computer program(s) coded in accordance with various methods described herein, and the method steps of the disclosure could be accomplished by modules, routines, subroutines, or subparts of a computer program product. The scope of the disclosure is determined by the claims that follow. The disclosure is not limited to the described embodiments, versions or examples, which are included to enable a person having ordinary skill in the art to make and use the disclosure when combined with information and knowledge available to the person having ordinary skill in the art.

**Claims**

1.  A computer-implemented method for determining an emission amount of an agricultural product related gas in a geographical area, wherein the method comprises:

    - determining a geographical area;
    - receiving soil and weather data for the determined geographical area;
    - receiving agricultural product data, wherein receiving agricultural product data comprises receiving an agricultural product composition and an agricultural product amount;
    - wherein determining an emission amount further comprises:
    - generating a grid with a plurality of grid cells over the determined geographical area, and determining for a plurality of grid cells:

        - a soil profile;
        - a volumetric soil water content;
        - a water filled pore space value based on the volumetric soil water content and the soil profile;
        - an emission factor based on the water filled pore space;
        - an agricultural product amount;

    - an emission amount of an agricultural product related gas based on the emission factor and the agricultural product amount; and wherein the method further comprises: -generating an emission amount of the agricultural product related gas for the determined area based on the determined emission amount for at least a portion of the grid cells.

2. A method according to claim 1, wherein determining a soil profile for the plurality of cells comprises generating a plurality of vertical soil layers and determining a volumetric soil water status comprises determining movement of water in the plurality of layers comprised in the plurality of grid cells.

3. A method according to claim 2, wherein determining an emission factor comprises determining a water filled pore space value for the top layer of the plurality of layers and the emission factor is determined based on the water filled pore space value of the top layer.

4. A method according to claim 1, wherein determining a volumetric soil water content comprises at least one of determining soil water movement, an evapotranspiration amount and a root water uptake.

5. A method according to claim 4, wherein determining an evapotranspiration amount comprises determining an evapotranspiration amount ($ET_0$) and calibrating by means of a crop coefficient (Kc).

6. A method according to claim 5, wherein calibrating by means of a crop coefficient further comprises having a crop transpiration coefficient (Kcb) and a crop related soil evaporation coefficient (Ke).

7. A method according to claim 1, wherein receiving agricultural product data further comprises receiving at least one of agricultural product application maps and agricultural product sales data.

8. A method according to claim 1, wherein determining a geographical area further comprises receiving landcover classification data and defining subareas based on the landcover classification data.

9. A method according to claim 8, wherein determining for at least a portion of the grid cells comprises the plurality of grid cells present in the defined subareas.

10. A method according to claim 1, wherein the method further comprises determining at least one agricultural product application amount at at least one application timing such that an emission amount is minimized.

11. A method according to claim 1, wherein receiving agricultural product data comprises receiving a plurality of agricultural product compositions and agricultural product amounts, the method being further configured to determine the emission for the plurality of agricultural product compositions and product amounts.

12. A method according to claim 11, wherein based on the determined emission for the plurality of agricultural product compositions and product amounts, a specific product composition and corresponding product amount is determined which results in the smaller emission amount.

13. A data processing apparatus comprising means for carrying out the method of any one of the claims 1 to 12.

14. A computer-readable storage medium comprising instructions which, when executed by a computer system, cause the computer system to carry out the method of any one of the claims 1 to 12.

15. A computer program product comprising instructions which, when the program is executed by a computer system, cause the computer system to carry out the method of any one of the claims 1 to 12.

**FIG. 1A**

**FIG. 1B**

FIG. 2C

FIG. 2B

FIG. 2A

FIG. 3A          FIG. 3B          FIG. 3C

FIG. 4C

FIG. 4B

FIG. 4A

FIG. 5

FIG. 6

FIG. 7

Europäisches
Patentamt

European
Patent Office

Office européen
des brevets

## EUROPEAN SEARCH REPORT

**Application Number**

**EP 24 21 2004**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/365061 A1 (SEGAL BRIAN [US] ET AL) 17 November 2022 (2022-11-17) | 1,7, 13-15 | INV. G06Q50/02 |
| Y | * paragraph [0004] - paragraph [0319] * ----- | 2-6,8-12 | A01B79/00 H04W4/02 |
| Y | CA 2 699 571 A1 (NZ INST PLANT & FOOD RES LTD [NZ]) 16 April 2009 (2009-04-16) | 2-6, 10-12 | H04W4/38 |
| A | * paragraph [0004] - paragraph [0030] * ----- | 1,7-9, 13-15 | |
| Y | AU 2021 201 834 A1 (CLIMATE LLC [US]) 29 April 2021 (2021-04-29) | 8,9 | |
| A | * paragraph [0026] - paragraph [0088] * ----- | 1-7, 10-15 | |

**TECHNICAL FIELDS
SEARCHED      (IPC)**

G06Q
A01B
H04W

The present search report has been drawn up for all claims

| Place of search | Date of completion of the search | Examiner |
|---|---|---|
| The Hague | 31 January 2025 | Mas Tur, Elena |

EPO FORM 1503 03.82 (P04C01)

## ANNEX TO THE EUROPEAN SEARCH REPORT
## ON EUROPEAN PATENT APPLICATION NO.

EP 24 21 2004

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2025

| Patent document cited in search report | | Publication date | Patent family member(s) | | Publication date |
|---|---|---|---|---|---|
| US 2022365061 | A1 | 17-11-2022 | BR 112023017864 | A2 | 12-12-2023 |
| | | | CA 3212719 | A1 | 27-10-2022 |
| | | | EP 4327093 | A1 | 28-02-2024 |
| | | | US 2022365061 | A1 | 17-11-2022 |
| | | | US 2023147951 | A1 | 11-05-2023 |
| | | | US 2024175859 | A1 | 30-05-2024 |
| | | | WO 2022226023 | A1 | 27-10-2022 |
| CA 2699571 | A1 | 16-04-2009 | CA 2699571 | A1 | 16-04-2009 |
| | | | EP 2212854 | A1 | 04-08-2010 |
| | | | NZ 562316 | A | 31-03-2009 |
| | | | US 2010306012 | A1 | 02-12-2010 |
| | | | WO 2009048341 | A1 | 16-04-2009 |
| AU 2021201834 | A1 | 29-04-2021 | AR 103494 | A1 | 17-05-2017 |
| | | | AR 123608 | A2 | 21-12-2022 |
| | | | AU 2015315001 | A1 | 27-04-2017 |
| | | | AU 2021201834 | A1 | 29-04-2021 |
| | | | BR 112017004750 | A2 | 26-06-2018 |
| | | | CA 2960424 | A1 | 17-03-2016 |
| | | | CN 107077650 | A | 18-08-2017 |
| | | | CO 2017003536 | A2 | 31-05-2017 |
| | | | EP 3192021 | A1 | 19-07-2017 |
| | | | EP 3693903 | A1 | 12-08-2020 |
| | | | UA 123762 | C2 | 02-06-2021 |
| | | | US 2016073573 | A1 | 17-03-2016 |
| | | | US 2020288626 | A1 | 17-09-2020 |
| | | | US 2024008390 | A1 | 11-01-2024 |
| | | | WO 2016040678 | A1 | 17-03-2016 |

EPO FORM P0459

For more details about this annex : see Official Journal of the European Patent Office, No. 12/82